(19) Europäisches Patentamt / European Patent Office / Office européen des brevets

(11) **EP 4 653 567 A1**

(12) **EUROPEAN PATENT APPLICATION**
published in accordance with Art. 153(4) EPC

(43) Date of publication:
**26.11.2025 Bulletin 2025/48**

(21) Application number: **24744755.0**

(22) Date of filing: **19.01.2024**

(51) International Patent Classification (IPC):
**C22C 38/00** (2006.01)     **C21D 8/00** (2006.01)
**C22C 38/58** (2006.01)

(52) Cooperative Patent Classification (CPC):
**C21D 8/00; C22C 38/00; C22C 38/58;** Y02P 10/20

(86) International application number:
**PCT/JP2024/001538**

(87) International publication number:
**WO 2024/154835 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.01.2023 JP 2023006380
19.01.2023 JP 2023006381**

(71) Applicant: **NIPPON STEEL CORPORATION**
**Chiyoda-ku**
**Tokyo 100-8071 (JP)**

(72) Inventors:
• **ANDOH, Misaho**
**Tokyo 100-8071 (JP)**
• **OMURA, Tomohiko**
**Tokyo 100-8071 (JP)**

• **NAKAYAMA, Eisuke**
**Tokyo 100-8071 (JP)**
• **TOMATSU, Kota**
**Tokyo 100-8071 (JP)**
• **NAKAMURA, Jun**
**Tokyo 100-8071 (JP)**
• **MATSUO, Hiroshi**
**Tokyo 100-8071 (JP)**
• **IZAWA, Takahiro**
**Tokyo 100-8071 (JP)**
• **TSUYUGUCHI, Satoshi**
**Tokyo 100-8071 (JP)**
• **OSUKI, Takahiro**
**Tokyo 100-8071 (JP)**

(74) Representative: **J A Kemp LLP**
**80 Turnmill Street**
**London EC1M 5QU (GB)**

(54) **AUSTENITIC STAINLESS STEEL MATERIAL**

(57)     An austenitic stainless steel material that has excellent strength and has excellent hydrogen embrittlement resistance in a high-pressure hydrogen gas environment is provided. An austenitic stainless steel material according to the present disclosure has a chemical composition described in the description, and satisfies Formula (1), Formula (2), and Formula (3). In the austenitic stainless steel material, the grain size number is 8.5 or more, and when the chemical composition is taken as 100% by mass, a total content of Nb, V, Cr, N, and C in a residue obtained by an extraction residue method is 0.090 to 0.425% in percent by mass, and a content of Cr in the residue is 0.180% or less in percent by mass:

$$2N + C > 0.40 \quad (1)$$

$$-7.1 + 2.7Ni + 0.49Cr + 2.0Mo - 2.0Si + 0.75Mn - 5.7C - 24N \leq 24.0 \quad (2)$$

$$Nb + V \geq 0.15 \quad (3)$$

where, a content of a corresponding element in percent by mass in the chemical composition is substituted for each symbol

EP 4 653 567 A1

of an element in Formula (1) to Formula (3). If an element is not contained, "0" is substituted for the corresponding symbol of an element.

**Description**

TECHNICAL FIELD

The present disclosure relates to an austenitic stainless steel material.

BACKGROUND ART

Recently, research into the practical application of transportation equipment that utilizes hydrogen as energy source, as typified by fuel cell vehicles, and hydrogen stations that supply hydrogen to such transportation equipment is being actively conducted. These hydrogen stations and transportation equipment are equipped with tanks for storing high-pressure hydrogen, and pipes for high-pressure hydrogen. Hydrogen embrittlement is an issue in tanks and pipes for high-pressure hydrogen. The term "hydrogen embrittlement" refers to a phenomenon whereby the ductility and toughness of a steel material are significantly reduced due to hydrogen penetrating into the steel material. Austenitic stainless steel materials used in tanks and pipes for high-pressure hydrogen are required to have excellent hydrogen embrittlement resistance in a high-pressure hydrogen gas environment.

Austenitic stainless steel materials used in tanks and pipes for high-pressure hydrogen are also required to have high strength in order to withstand hydrogen at high pressure.

Japanese Patent Application Publication No. 2018-135592 (Patent Literature 1) and Japanese Patent Application Publication No. 2021-139007 (Patent Literature 2) propose techniques for increasing the hydrogen embrittlement resistance and strength of an austenitic stainless steel material.

An austenitic stainless steel material for high-pressure hydrogen disclosed in Patent Literature 1 consists of, by mass%, C: 0.40 to 1.00%, Si: 1.00% or less, Mn: 2.00% or less, P: 0.040% or less, S: 0.030% or less, Ni: 8.00 to 14.00%, Cr: 16.00 to 21.00%, and N: 0.09% or less, with the balance being Fe and impurity elements, also satisfies a condition (Formula 1) that is 54.8C + 3.7Ni + 2.5Mn - 1.6Cr - 0.9Si + 266N - 39.6 > 0, and is used as it is after a solid solution heat treatment, and in addition, Cr carbides are present in the steel in an amount equivalent to an area fraction of 23% or more even. In the steel material disclosed in Patent Literature 1, because it is not necessary to add Mo, which is expensive, to the steel, the steel material can be produced using low-cost components. In addition, excellent strength and hardness can be obtained in the state as it is after a solid solution heat treatment, without performing cold working after the solid solution heat treatment. It is described in Patent Literature 1 that, as a result, an austenitic stainless steel material for high-pressure hydrogen which also has excellent hydrogen embrittlement resistance at low temperatures is obtained.

An austenitic stainless steel material for high-pressure hydrogen disclosed in Patent Literature 2 consists of, by mass%, C: 0.100% or less, Si: 1.00% or less, Mn: 1.50 to 6.00%, P: 0.050% or less, S: 0.030% or less, Ni: 4.0 to 12.0%, Cr: 17.0 to 19.0%, N: 0.12 to 0.30%, Nb: 0.01 to 0.20%, V: 0.01 to 0.10%, Mo: 0 to 0.10%, and Cu: 0 to 0.5%, with the balance being Fe and impurities, and satisfies Formula (1) to Formula (3), and in addition, in a cross section perpendicular to the longitudinal direction of the austenitic stainless steel material, a ratio A0/A1 of an austenite area fraction A0 (%) at the center position of the cross section to an austenite area fraction Al (%) at a position at a depth of 5 mm from the surface of the austenitic stainless steel material is 0.990 to 1.010. According to Patent Literature 2, by adjusting the chemical composition so that the contents of the elements satisfy Formula (1) to Formula (3), both hydrogen embrittlement resistance and high strength can be achieved.

$$-7.1 + 2.7Ni + 0.49Cr + 2.0Mo - 2.0Si + 0.75Mn - 5.7C - 24N \geq 10.00 \quad (1)$$

$$Ni + 0.72Cr + 0.88Mo + 1.11Mn - 0.27Si + 12.93C + 0.53Cu + 7.55N \geq 25.00 \ (2) \quad (2)$$

$$C + N \geq 0.22 \quad (3)$$

CITATION LIST

PATENT LITERATURE

Patent Literature 1: Japanese Patent Application Publication No. 2018-135592
Patent Literature 2: Japanese Patent Application Publication No. 2021-139007

## SUMMARY OF INVENTION

## TECHNICAL PROBLEM

In the austenitic stainless steel materials disclosed in Patent Literature 1 and Patent Literature 2 described above, an improvement in hydrogen embrittlement resistance and high strength are both achieved. However, recently, in some cases there is a demand for even higher strength than the strength achieved by the austenitic stainless steel materials disclosed in Patent Literature 1 and Patent Literature 2.

An objective of the present disclosure is to provide an austenitic stainless steel material that has excellent hydrogen embrittlement resistance and high strength in a high-pressure hydrogen gas environment.

## SOLUTION TO PROBLEM

An austenitic stainless steel material according to the present disclosure has a chemical composition consisting of, by mass%,

C: 0.005 to 0.150%,
Si: more than 0% and 1.00% or less,
Mn: 0.50% or more and less than 7.00%,
P: more than 0% and 0.050% or less,
S: more than 0% and 0.010% or less,
Cr: 17.0 to 25.0%,
Ni: 6.5 to 12.0%,
Al: more than 0% and 0.050% or less,
N: 0.15 to 0.50%,
O: more than 0% and 0.010% or less,
one or two elements selected from a group consisting of Nb: more than 0% and 1.00% or less and V: more than 0% and 1.00% or less,
Mo: 0 to 1.00%,
B: 0 to 0.0100%,
Cu: 0 to 0.50%,
Co: 0 to 0.50%,
Ca: 0 to 0.035%, and
rare earth metal: 0 to 0.500%,
with the balance being Fe and impurities,
satisfies Formula (1), Formula (2), and Formula (3), and
has a grain size number of 8.5 or more;
wherein:

when the chemical composition is taken as 100% in percent by mass, a total content of Nb, V, Cr, N, and C in a residue obtained by an extraction residue method is 0.090 to 0.425% in percent by mass; and
when the chemical composition is taken as 100% in percent by mass, a content of Cr in the residue obtained by the extraction residue method is 0.180% or less in percent by mass:

$$2N + C > 0.40 \quad (1)$$

$$-7.1 + 2.7Ni + 0.49Cr + 2.0Mo - 2.0Si + 0.75Mn - 5.7C - 24N \le 24.0 \quad (2)$$

$$Nb + V \ge 0.15 \quad (3)$$

where, a content of a corresponding element in percent by mass in the chemical composition is substituted for each symbol of an element in Formula (1) to Formula (3). If an element is not contained, "0" is substituted for the corresponding symbol of an element.

ADVANTAGEOUS EFFECTS OF INVENTION

The austenitic stainless steel material of the present disclosure is excellent in hydrogen embrittlement resistance in a high-pressure hydrogen gas environment and has high strength.

DESCRIPTION OF EMBODIMENTS

The present inventors conducted investigations and studies with respect to an austenitic stainless steel material that is excellent in hydrogen embrittlement resistance and strength. As a result, the present inventors obtained the following finding.

First, the present inventors conducted studies from the viewpoint of the chemical composition with respect to an austenitic stainless steel material that is excellent in strength and hydrogen embrittlement resistance. As a result, the present inventors have considered that if an austenitic stainless steel material has a chemical composition consisting of, by mass%, C: 0.005 to 0.150%, Si: more than 0% and 1.00% or less, Mn: 0.50% or more and less than 7.00%, P: more than 0% and 0.050% or less, S: more than 0% and 0.010% or less, Cr: 17.0 to 25.0%, Ni: 6.5 to 12.0%, Al: more than 0% and 0.050% or less, N: 0.15 to 0.50%, O: more than 0% and 0.010% or less, one or two elements selected from a group consisting of Nb: more than 0% and 1.00% or less and V: more than 0% and 1.00% or less, Mo: 0 to 1.00%, B: 0 to 0.0100%, Cu: 0 to 0.50%, Co: 0 to 0.50%, Ca: 0 to 0.035%, and rare earth metal: 0 to 0.500%, with the balance being Fe and impurities, high strength and excellent hydrogen embrittlement resistance will be obtained in the austenitic stainless steel material.

However, even in an austenitic stainless steel material having the chemical composition described above, it was still difficult to achieve both excellent hydrogen embrittlement resistance and high strength. Therefore the present inventors conducted further studies. As a result, the present inventors obtained the following findings.

In an austenitic stainless steel material having the chemical composition described above, in order to further increase the strength while securing excellent hydrogen embrittlement resistance, it is effective to use (I) a solid-solution strengthening mechanism, (II) a strengthening mechanism that strengthens by reducing stacking fault energy, and (III) a strengthening mechanism that strengthens by refinement of the grains.

With regard to (I) the solid-solution strengthening mechanism, in an austenitic stainless steel material having the chemical composition described above, solid-solution strengthening that utilizes carbon (C) and nitrogen (N) can markedly increase the strength in comparison to precipitation strengthening.

In order to increase the strength utilizing the aforementioned solid-solution strengthening mechanism, it is effective for an austenitic stainless steel material having the chemical composition described above to also satisfy the following Formula (1):

$$2N + C > 0.40 \quad (1)$$

where, a content of a corresponding element in percent by mass in the chemical composition is substituted for each symbol of an element in Formula (1).

With regard to (II) the strengthening mechanism that strengthens by reducing stacking fault energy, if the stacking fault energy is low, stacking faults will tend to occur. Stacking faults increase the strength of a steel material. Therefore, in the case of increasing the strength of an austenitic stainless steel material having the chemical composition described above, it is effective to lower the stacking fault energy. To increase the strength by reducing the stacking fault energy, it is effective to satisfy the following Formula (2):

$$-7.1 + 2.7Ni + 0.49Cr + 2.0Mo - 2.0Si + 0.75Mn - 5.7C - 24N \le 24.0 \quad (2)$$

where, a content of a corresponding element in percent by mass in the chemical composition is substituted for each symbol of an element in Formula (2). If an element is not contained, "0" is substituted for the corresponding symbol of an element.

With regard to (III) the strengthening mechanism that strengthens by refinement of the grains, in an austenitic stainless steel material having the chemical composition described above, in order to obtain high strength, it is effective to make the grain size number of the grains 8.5 or more.

The present inventors also investigated means for further increasing hydrogen embrittlement resistance while realizing the aforementioned increase in strength. As a result, the present inventors obtained the following finding.

In an austenitic stainless steel material having the chemical composition described above, although NbV precipitates that contain Nb and/or V do not contribute a great deal to increasing strength, the NbV precipitates markedly increase hydrogen embrittlement resistance. More specifically, in an austenitic stainless steel material having the chemical composition described above, if Formula (3) is satisfied, excellent hydrogen embrittlement resistance will be obtained:

$$Nb + V \geq 0.15 \quad (3)$$

where, a content of a corresponding element in percent by mass in the chemical composition is substituted for each symbol of an element in Formula (3).

In the present description, the term "NbV precipitates" refers to any one type or more among Nb precipitates, V precipitates, and composite precipitates containing Nb and V. Nb precipitates include Nb carbides, Nb nitrides, and Nb carbo-nitrides. V precipitates include V carbides, and V carbo-nitrides. Composite precipitates containing Nb and V include carbides, nitrides, and carbo-nitrides containing Nb and V.

Although the reason why hydrogen embrittlement resistance is increased by satisfying Formula (3) is not certain, it is considered that the reason may be as follows. NbV precipitates that contain Nb and/or V are fine in comparison to precipitates of other alloying elements. Fine NbV precipitates suppress planar dislocation motion which is active on specific slip planes among dislocation motion that occurs during plastic deformation. Therefore, concentration of dislocations at interfaces (crystal grain boundaries, twin boundaries, and the like) that serve as fracture initiation sites is suppressed. As a result, stress concentration at the interfaces is suppressed, and the hydrogen embrittlement resistance of the steel material is markedly enhanced.

However, even when the chemical composition described above was satisfied, and Formula (1) to Formula (3) were also satisfied, cases still occurred where it was difficult to achieve both excellent hydrogen embrittlement resistance and high strength. Therefore, the present inventors conducted further studies. As a result, the following finding was newly obtained.

The grain size number of austenite grains in an austenitic stainless steel material that has the chemical composition described above and satisfies Formula (1) to Formula (3) is to be 8.5 or more. In this case, high strength is obtained.

In addition, when the chemical composition of the austenitic stainless steel material is taken as 100% in percent by mass, the total content of Nb, V, Cr, N, and C in a residue obtained by an extraction residue method is to be 0.090 to 0.425%, and the content of Cr is to be 0.180% or less in percent by mass.

The total content of Nb, V, Cr, N, and C and the content of Cr in the residue are indexes of the types of precipitates and the amount of precipitates in the austenitic stainless steel material. Here, the total content of Nb, V, Cr, N, and C in the residue is referred to as a "residue total content" (mass%), and the content of Cr in the residue is referred to as a "residue Cr content".

If the residue total content is less than 0.090%, even if Formula (3) is satisfied, the amount of NbV precipitates will not be sufficient. In such a case, the NbV precipitates cannot sufficiently inhibit the motion of dislocations. Consequently, concentration of dislocations at interfaces that serve as fracture initiation sites will occur, and sufficient hydrogen embrittlement resistance will not be obtained.

On the other hand, if the residue total content is more than 0.425%, the amount of precipitates will be excessively large. In such a case, precipitates will form not only within grains, but will also form excessively at grain boundaries. Consequently, the strength of grain boundaries that serve as fracture initiation sites will decrease, and sufficient hydrogen embrittlement resistance will not be obtained. Further, even when the residue total content is 0.425% or less, if the residue Cr content is more than 0.180%, the proportion of Cr carbides among the precipitates will be excessively large as compared to the proportion of NbV precipitates. Cr carbides precipitate at grain boundaries, and therefore in this case also the grain boundary strength will decrease. As a result, sufficient hydrogen embrittlement resistance will not be obtained.

When the residue total content is 0.090 to 0.425% and the residue Cr content is 0.180% or less, a sufficient amount of NbV precipitates that inhibit the motion of dislocations is formed in the austenite grains. Therefore, the motion of dislocations is sufficiently suppressed, and excellent hydrogen embrittlement resistance is obtained.

The austenitic stainless steel material according to the present embodiment that has been completed based on the technical idea described above is as follows.

An austenitic stainless steel material according to a first configuration has a chemical composition consisting of, by mass%,

C: 0.005 to 0.150%,
Si: more than 0% and 1.00% or less,
Mn: 0.50% or more and less than 7.00%,
P: more than 0% and 0.050% or less,
S: more than 0% and 0.010% or less,
Cr: 17.0 to 25.0%,
Ni: 6.5 to 12.0%,

Al: more than 0% and 0.050% or less,
N: 0.15 to 0.50%,
O: more than 0% and 0.010% or less,
one or two elements selected from a group consisting of Nb: more than 0% and 1.00% or less and V: more than 0% and 1.00% or less,
Mo: 0 to 1.00%,
B: 0 to 0.0100%,
Cu: 0 to 0.50%,
Co: 0 to 0.50%,
Ca: 0 to 0.035%, and
rare earth metal: 0 to 0.500%,
with the balance being Fe and impurities,
satisfies Formula (1), Formula (2), and Formula (3), and
has a grain size number of 8.5 or more;
wherein:

when the chemical composition is taken as 100% in percent by mass, a total content of Nb, V, Cr, N, and C in a residue obtained by an extraction residue method is 0.090 to 0.425% in percent by mass; and
when the chemical composition is taken as 100% in percent by mass, a content of Cr in the residue obtained by the extraction residue method is 0.180% or less in percent by mass:

$$2N + C > 0.40 \quad (1)$$

$$-7.1 + 2.7Ni + 0.49Cr + 2.0Mo - 2.0Si + 0.75Mn - 5.7C - 24N \leq 24.0 \quad (2)$$

$$Nb + V \geq 0.15 \quad (3)$$

where, a content of a corresponding element in percent by mass in the chemical composition is substituted for each symbol of an element in Formula (1) to Formula (3). If an element is not contained, "0" is substituted for the corresponding symbol of an element.

An austenitic stainless steel material according to a second configuration is in accordance with the austenitic stainless steel material of the first configuration, wherein the chemical composition contains one or more types of element selected from a group consisting of, by mass%,

Mo: 0.01 to 1.00%,
B: 0.0001 to 0.0100%,
Cu: 0.01 to 0.50%,
Co: 0.01 to 0.50%,
Ca: 0.001 to 0.035%, and
rare earth metal: 0.001 to 0.500%.

An austenitic stainless steel material according to a third configuration is in accordance with the austenitic stainless steel material of the first or second configuration, wherein:

the grain size number is 9.0 or more, and
a tensile strength is 800 MPa or more.

An austenitic stainless steel material according to a fourth configuration has a chemical composition that contains, by mass%,

C: 0.005 to 0.150%,
Si: 1.00% or less,
Mn: 0.50 to less than 3.00%,
P: 0.050% or less,
S: 0.010% or less,

Cr: 17.0 to 25.0%,
Ni: 7.0 to 12.0%,
Al: 0.050% or less,
N: 0.15 to 0.50%, and
O: 0.010% or less,
and further contains one or more types of element selected from a group consisting of:

Nb: 1.00% or less, and
V: 1.00% or less,
with the balance being Fe and impurities,
satisfies Formula (1), Formula (2A), and Formula (3), and
has a grain size number of 9.0 or more:

$$2N + C > 0.40 \quad (1)$$

$$-7.1 + 2.7Ni + 0.49Cr - 2.0Si + 0.75Mn - 5.7C - 24N \leq 24.0 \quad (2A)$$

$$Nb + V \geq 0.15 \quad (3)$$

where, a content of a corresponding element in percent by mass in the chemical composition is substituted for each symbol of an element in Formula (1), Formula (2A), and Formula (3).

An austenitic stainless steel material according to a fifth configuration has a chemical composition that contains, by mass%,

C: 0.005 to 0.150%,
Si: 1.00% or less,
Mn: 0.50 to less than 3.00%,
P: 0.050% or less,
S: 0.010% or less,
Cr: 17.0 to 25.0%,
Ni: 7.0 to 12.0%,
Al: 0.050% or less,
N: 0.15 to 0.50%, and
O: 0.010% or less,
and also contains one or more types of element selected from a group consisting of:

Nb: 1.00% or less, and
V: 1.00% or less,
and further contains one or more types of element selected from a group consisting of a first group and a second group,
with the balance being Fe and impurities,
satisfies Formula (1) to Formula (3), and
has a grain size number of 9.0 or more:

$$2N + C > 0.40 \quad (1)$$

$$-7.1 + 2.7Ni + 0.49Cr + 2.0Mo - 2.0Si + 0.75Mn - 5.7C - 24N \leq 24.0 \quad (2)$$

$$Nb + V \geq 0.15 \quad (3)$$

where, a content of a corresponding element in percent by mass in the chemical composition is substituted for each symbol of an element in Formula (1) to Formula (3).

[First group]

One or more type of element selected from a group consisting of:

Mo: 1.00% or less,
Cu: 0.50% or less, and
Ti: 0.50% or less.

[Second group]

Ca: 0.035% or less.

Hereunder, the austenitic stainless steel material of the present embodiment is described in detail. The symbol "%" in relation to an element means "mass percent" unless otherwise stated.

[Features of austenitic stainless steel material of present embodiment]

The austenitic stainless steel material of the present embodiment satisfies the following feature 1 to feature 4.

(Feature 1)

The chemical composition consists of, by mass%, C: 0.005 to 0.150%, Si: more than 0% and 1.00% or less, Mn: 0.50% or more and less than 7.00%, P: more than 0% and 0.050% or less, S: more than 0% and 0.010% or less, Cr: 17.0 to 25.0%, Ni: 6.5 to 12.0%, Al: more than 0% and 0.050% or less, N: 0.15 to 0.50%, O: more than 0% and 0.010% or less, one or two elements selected from a group consisting of Nb: more than 0% and 1.00% or less and V: more than 0% and 1.00% or less, Mo: 0 to 1.00%, B: 0 to 0.0100%, Cu: 0 to 0.50%, Co: 0 to 0.50%, Ca: 0 to 0.035%, and rare earth metal: 0 to 0.500%, with the balance being Fe and impurities.

(Feature 2)

Formula (1) to Formula (3) are satisfied:

$$2N + C > 0.40 \quad (1)$$

$$-7.1 + 2.7Ni + 0.49Cr + 2.0Mo - 2.0Si + 0.75Mn - 5.7C - 24N \leq 24.0 \quad (2)$$

$$Nb + V \geq 0.15 \quad (3)$$

where, a content of a corresponding element in percent by mass in the chemical composition is substituted for each symbol of an element in Formula (1) to Formula (3). If an element is not contained, "0" is substituted for the corresponding symbol of an element.

(Feature 3)

The grain size number is 8.5 or more.

(Feature 4)

When the chemical composition is taken as 100% in percent by mass, the total content of Nb, V, Cr, N, and C in a residue obtained by the extraction residue method is 0.090 to 0.425% in percent by mass, and when the chemical composition is taken as 100% in percent by mass, a content of Cr in the residue obtained by the extraction residue method is 0.180% or less in percent by mass.

[(Feature 1) Regarding chemical composition]

The chemical composition of the austenitic stainless steel material of the present embodiment contains the following elements.

C: 0.005 to 0.150%

Carbon (C) forms carbides and increases the strength of the austenitic stainless steel material. C also increases the strength of the steel material by solid-solution strengthening. If the content of C is less than 0.005%, the aforementioned advantageous effects will not be sufficiently obtained. On the other hand, if the content of C is more than 0.150%, carbides will excessively form at grain boundaries, and toughness of the steel material will decrease. Therefore, the content of C is 0.005 to 0.150.

A preferable lower limit of the content of C is 0.006%, more preferably is 0.007%, further preferably is 0.008%, and further preferably is 0.015%.

A preferable upper limit of the content of C is 0.140%, more preferably is 0.130%, further preferably is 0.120%, further preferably is 0.100%, further preferably is 0.080%, and further preferably is 0.040%.

Si: more than 0% and 1.00% or less

Silicon (Si) is unavoidably contained. In other words, the content of Si is more than 0%. Si deoxidizes the steel. However, if the content of Si is too high, Si will excessively form intermetallic compounds, and hot workability and toughness of the steel material will decrease. Therefore, the content of Si is more than 0% and 1.00% or less.

A preferable upper limit of the content of Si is 0.98%, more preferably is 0.96%, further preferably is 0.94%, and further preferably is 0.92%.

If the content of Si is excessively reduced, the production cost will rise. Therefore, taking into consideration normal industrial production, a preferable lower limit of the content of Si is 0.01%, more preferably is 0.05%, and further preferably is 0.10%.

Mn: 0.50% or more and less than 7.00%

Manganese (Mn) stabilizes austenite and suppresses formation of martensite that has a high susceptibility to hydrogen embrittlement. Mn also increases the dissolved amount of N, and thereby increases the strength of the steel material by solid-solution strengthening of N. If the content of Mn is less than 0.50%, the aforementioned advantageous effects will not be sufficiently obtained. On the other hand, if the content of Mn is 7.00% or more, ductility and hot workability of the steel material will decrease. Therefore, the content of Mn is 0.50 or more and less than 7.00%.

A preferable lower limit of the content of Mn is 0.52%, more preferably is 0.55%, further preferably is 0.60%, and further preferably is 1.20%.

A preferable upper limit of the content of Mn is 6.80%, more preferably is 6.50%, further preferably is 5.00%, further preferably is 4.50%, further preferably is 4.00%, further preferably is 3.50%, further preferably is less than 3.00%, and further preferably is 2.50%.

P: more than 0% and 0.050% or less

Phosphorus (P) is an impurity that is unavoidably contained. In other words, the content of P is more than 0%. P decreases hot workability and toughness of the steel material. Therefore, the content of P is more than 0% and 0.050% or less.

The content of P is preferably as low as possible. However, excessively reducing the content of P will raise the production cost. Therefore, taking into consideration normal industrial production, a preferable lower limit of the content of P is 0.001%, and more preferably is 0.002%.

A preferable upper limit of the content of P is 0.040%, and more preferably is 0.030%.

S: more than 0% and 0.010% or less

Sulfur (S) is an impurity that is unavoidably contained. In other words, the content of S is more than 0%. S decreases hot workability and toughness of the steel material. Therefore, the content of S is more than 0% and 0.010% or less.

The content of S is preferably as low as possible. However, excessively reducing the content of S will raise the production cost. Therefore, taking into consideration normal industrial production, a preferable lower limit of the content of S is 0.001%, and more preferably is 0.002%.

A preferable upper limit of the content of S is 0.008%, and more preferably is 0.006%.

Cr: 17.0 to 25.0%

Chromium (Cr) increases the corrosion resistance of the steel material. Cr also increases the dissolved amount of N, and thereby increases the strength of the steel material by solid-solution strengthening of N. If the content of Cr is less than 17.0%, the aforementioned advantageous effects will not be sufficiently obtained. On the other hand, if the content of Cr is more than 25.0%, Cr carbides will excessively form, and ductility and toughness of the steel material will decrease. Therefore, the content of Cr is 17.0 to 25.0%.

The lower limit of the content of Cr is preferably 17.5%, more preferably is 17.8%, and further preferably is 18.0%.

The upper limit of the content of Cr is preferably 24.8%, more preferably is 24.0%, and further preferably is 23.0%.

Ni: 6.5 to 12.0%

Nickel (Ni) stabilizes austenite and suppresses the formation of strain-induced martensite. By this means, Ni increases the hydrogen embrittlement resistance of the steel material. If the content of Ni is less than 6.5%, the aforementioned advantageous effect will not be sufficiently obtained. On the other hand, if the content of Ni is more than 12.0%, hot workability of the steel material will decrease. Therefore, the content of Ni is 6.5 to 12.0%.

A preferable lower limit of the content of Ni is 6.8%, more preferably is 7.0%, further preferably is 7.3%, further preferably is 8.0%, and further preferably is 8.5%.

A preferable upper limit of the content of Ni is 11.5%, more preferably is 11.0%, further preferably is 10.5%, further preferably is 10.0%, and further preferably is 9.5%.

Al: more than 0% and 0.050% or less

Aluminum (Al) is unavoidably contained. In other words, the content of Al is more than 0%. Al deoxidizes the steel. If even a small amount of Al is contained, this effect is obtained to a certain extent. However, if the content of Al is more than 0.050%, oxides and intermetallic compounds will form in the steel material. In such a case, the toughness of the steel material will decrease. Therefore, the content of Al is more than 0% and 0.050% or less.

A preferable lower limit of the content of Al is 0.001%, and more preferably is 0.002%.

A preferable upper limit of the content of Al is 0.045%, and more preferably is 0.040%.

In the present description, the term "content of Al" means the content of sol. Al (acid-soluble Al).

N: 0.15 to 0.50%

Nitrogen (N) stabilizes austenite. N also increases the strength of the steel material by solid-solution strengthening. If the content of N is less than 0.15%, even if the contents of other elements are within the range of the present embodiment, the aforementioned advantageous effects will not be sufficiently obtained. On the other hand, if the content of N is more than 0.50%, even if the contents of other elements are within the range of the present embodiment, the toughness and workability of the steel material will decrease. Therefore, the content of N is 0.15 to 0.50%.

The lower limit of the content of N is preferably 0.16%, more preferably is 0.18%, and further preferably is 0.20%.

The upper limit of the content of N is preferably 0.47%, more preferably is 0.45%, and further preferably is 0.40%.

O: more than 0% and 0.010% or less

Oxygen (O) is an impurity that is unavoidably contained. In other words, the content of O is more than 0%. O decreases hot workability of the steel material. Therefore, the content of O is more than 0% and 0.010% or less.

The content of O is preferably as low as possible. However, excessively reducing the content of O will increase the production cost. Therefore, taking into consideration normal industrial production, a preferable lower limit of the content of O is more than 0%, more preferably is 0.001%, and further preferably is 0.002%.

The upper limit of the content of O is preferably 0.009%, more preferably is 0.008%, and further preferably is 0.006%.

One or two elements selected from the group consisting of Nb: more than 0% and 1.00% or less and V: more than 0% and 1.00% or less

Niobium (Nb) and vanadium (V) each form precipitates, and thereby increase the hydrogen embrittlement resistance of the steel material. In addition, Nb and V increase the grain size number by a pinning effect. If even a small amount of at least one of Nb and V is contained, the aforementioned advantageous effects will be obtained to a certain extent. On the other hand, if the content of Nb is more than 1.00% or the content of V is more than 1.00%, the toughness and hot workability of the steel material will decrease. Consequently, in some cases a crack may occur during the process of producing the steel material. Therefore, the chemical composition of the steel material of the present embodiment contains one type or more among Nb for which the content is 1.00% or less and V for which the content is 1.00% or less.

A preferable lower limit of the content of Nb is 0.01%, more preferably is 0.03%, and further preferably is 0.05%.

A preferable upper limit of the content of Nb is 0.90%, more preferably is 0.70%, further preferably is 0.50%, and further preferably is 0.40%.

A preferable lower limit of the content of V is 0.01%, more preferably is 0.03%, and further preferably is 0.05%.

A preferable upper limit of the content of V is 0.90%, more preferably is 0.70%, further preferably is 0.50%, and further preferably is 0.40%.

The balance of the chemical composition of the austenitic stainless steel material according to the present embodiment is Fe and impurities. Here, the term "impurities" refers to substances which, during industrial production of the austenitic stainless steel material, are mixed in from ore or scrap that is used as the raw material, or from the production environment or the like, and which are allowed within a range that does not adversely affect the austenitic stainless steel material according to the present embodiment.

[Regarding optional elements]

The chemical composition of the austenitic stainless steel material according to the present embodiment may further contain, in lieu of a part of Fe, one or more types of element selected from the group consisting of:

Mo: 0 to 1.00%,
B: 0 to 0.0100%,
Cu: 0 to 0.50%,
Co: 0 to 0.50%,
Ca: 0 to 0.035%, and
rare earth metal: 0 to 0.500%.

Each of these elements is an optional element. These optional elements are described hereunder.

[Regarding first group (Mo, B, Cu, and Co)]

The chemical composition of the austenitic stainless steel material of the present embodiment may contain one or more types of element selected from the group consisting of Mo, B, Cu, and Co in lieu of a part of Fe. Each of these elements increases the strength of the steel material.

Mo: 0 to 1.00%

Molybdenum (Mo) is an optional element, and does not have to be contained. In other words, the content of Mo may be 0%.

When contained, Mo increases the strength of the steel material. Mo also increases the hydrogen embrittlement resistance of the steel material. If even a small amount of Mo is contained, the aforementioned advantageous effects will be obtained to a certain extent.

However, if the content of Mo is more than 1.00%, it will be easy for intermetallic compounds to precipitate. In such a case, the ductility and toughness of the steel material will decrease.

Therefore, the content of Mo is 0 to 1.00%.

A preferable lower limit of the content of Mo is 0.01%, and more preferably is 0.05%.

A preferable upper limit of the content of Mo is 0.98%, more preferably is 0.90%, further preferably is 0.80%, and further preferably is 0.60%.

B: 0 to 0.0100%

Boron (B) is an optional element, and does not have to be contained. In other words, the content of B may be 0%.

When contained, B increases the strength of the steel material. B also increases the hydrogen embrittlement resistance of the steel material. If even a small amount of B is contained, the aforementioned advantageous effects will be obtained to a certain extent.

However, if the content of B is more than 0.0100%, hot workability of the steel material will decrease. Therefore, the content of B is 0 to 0.0100%.

A preferable lower limit of the content of B is 0.0001%, and more preferably is 0.0005%.

A preferable upper limit of the content of B is 0.0080%, more preferably is 0.0050%, and further preferably is 0.0020%.

Cu: 0 to 0.50%

Copper (Cu) is an optional element, and does not have to be contained. In other words, the content of Cu may be 0%.

When contained, Cu stabilizes austenite. Cu also increases the strength of the steel material by solid-solution strengthening. If even a small amount of Cu is contained, the aforementioned advantageous effects will be obtained to a certain extent.

However, if the content of Cu is more than 0.50%, hot workability of the steel material will decrease.

Therefore, the content of Cu is 0 to 0.50%.

A preferable lower limit of the content of Cu is 0.01%, and more preferably is 0.05%.

A preferable upper limit of the content of Cu is 0.48%, more preferably is 0.40%, and further preferably is 0.30%.

Co: 0 to 0.50%

Cobalt (Co) is an optional element, and does not have to be contained. In other words, the content of Co may be 0%.

When contained, Co stabilizes austenite. Co also increases the strength of the steel material by solid-solution strengthening. If even a small amount of Co is contained, the aforementioned advantageous effects will be obtained to a certain extent.

However, if the content of Co is more than 0.50%, hot workability of the steel material will decrease.

Therefore, the content of Co is 0 to 0.50%.

A preferable lower limit of the content of Cu is 0.01%, and more preferably is 0.02%.

A preferable upper limit of the content of Cu is 0.48%, more preferably is 0.40%, and further preferably is 0.30%.

[Regarding second group (Ca and rare earth metal (REM))]

The chemical composition of the austenitic stainless steel material of the present embodiment may contain one or more types of element selected from the group consisting of Ca and rare earth metal (REM) in lieu of a part of Fe. Each of these elements increases hot workability of the steel material.

Ca: 0 to 0.035%

Calcium (Ca) is an optional element, and does not have to be contained. In other words, the content of Ca may be 0%.

When contained, Ca immobilizes S as a sulfide and thereby increases hot workability of the steel material. Ca also deoxidizes the steel. If even a small amount of Ca is contained, the aforementioned advantageous effects will be obtained to a certain extent.

However, if the content of Ca is more than 0.035%, the toughness and hot workability of the steel material will decrease.

Therefore, the content of Ca is 0 to 0.035%.

A preferable lower limit of the content of Ca is 0.001%, more preferably is 0.005%, further preferably is 0.010%, and further preferably is 0.020%.

A preferable upper limit of the content of Ca is 0.030%.

Rare earth metal (REM): 0 to 0.500%

Rare earth metal (REM) is an optional element, and does not have to be contained. In other words, the content of REM may be 0%.

When contained, REM modifies the morphology of sulfides and thereby increases hot workability of the steel material. If even a small amount of REM is contained, the aforementioned advantageous effect will be obtained to a certain extent.

However, if the content of REM is more than 0.500%, the toughness and hot workability of the steel material will decrease.

Therefore, the content of REM is 0 to 0.500%.

A preferable lower limit of the content of REM is 0.001%, more preferably is 0.002%, and further preferably is 0.005%.

A preferable upper limit of the content of REM is 0.400%, more preferably is 0.300%, further preferably is 0.200%, and further preferably is 0.100%.

Note that, in the present description the term "REM" means one or more types of element selected from the group consisting of scandium (Sc) which is the element with atomic number 21, yttrium (Y) which is the element with atomic number 39, and the elements from lanthanum (La) with atomic number 57 to lutetium (Lu) with atomic number 71 that are lanthanoids. Further, in the present description, the term "content of REM" means the total content of these elements.

[(Feature 2) Regarding Formula (1) to Formula (3)]

The chemical composition of the austenitic stainless steel material of the present embodiment also satisfies Formula (1) to (3):

$$2N + C > 0.40 \quad (1)$$

$$-7.1 + 2.7Ni + 0.49Cr + 2.0Mo - 2.0Si + 0.75Mn - 5.7C - 24N \leq 24.0 \quad (2)$$

$$Nb + V \geq 0.15 \quad (3)$$

where, a content of a corresponding element in percent by mass in the chemical composition is substituted for each symbol of an element in Formula (1) to Formula (3). If an element is not contained, "0" is substituted for the corresponding symbol of an element.

Formula (1) to Formula (3) are described hereunder.

[Regarding Formula (1)]

Fn1 is defined as follows.

$$Fn1 = 2N + C$$

Fn1 corresponds to the left-hand side of Formula (1). Fn1 is an index of solid-solution strengthening of an austenitic stainless steel material that satisfies feature 1. If Fn1 is 0.40 or less, solid-solution strengthening by nitrogen (N) and carbon (C) will not be sufficiently obtained. If Fn1 is more than 0.40, high strength will be obtained in an austenitic stainless steel material that satisfies feature 1. Therefore, in the austenitic stainless steel material of the present embodiment, Fn1 is more than 0.40.

A preferable lower limit of Fn1 is 0.42, more preferably is 0.46, and further preferably is 0.50.

The upper limit of Fn1 is not particularly limited. However, when the chemical composition of an austenitic stainless steel material satisfies feature 1, the upper limit of Fn1 is 1.15.

[Regarding Formula (2)]

Fn2 is defined as follows.

$$Fn2 = -7.1 + 2.7Ni + 0.49Cr + 2.0Mo - 2.0Si + 0.75Mn - 5.7C - 24N$$

Fn2 corresponds to the left-hand side of Formula (2). Fn2 is an index of stacking fault energy in an austenitic stainless steel material that satisfies feature 1. The lower the stacking fault energy is, the easier it is for stacking faults to be formed. When stacking faults are formed, the strength of the steel material increases. Therefore, to increase the strength of an austenitic stainless steel material, it is preferable for the stacking fault energy to be low.

If Fn2 is higher than 24.0, the stacking fault energy will be too high. In such a case, even if an austenitic stainless steel material that satisfies feature 1 satisfies Formula (1) and Formula (3), sufficient strength will not be obtained. Therefore, in the austenitic stainless steel material of the present embodiment, Fn2 is 24.0 or less.

A preferable upper limit of Fn2 is 23.7, more preferably is 23.5, further preferably is 23.0, further preferably is 22.6, further preferably is 22.2, further preferably is 21.5, and further preferably is 21.0.

The lower limit of Fn2 is not particularly limited. However, in conventional industrial production, a preferable lower limit of Fn2 of an austenitic stainless steel material having a chemical composition satisfying feature 1 is, for example, 12.0, and more preferably is 14.0.

[Regarding Formula (3)]

Fn3 is defined as follows.

$$Fn3 = Nb + V$$

Fn3 corresponds to the left-hand side of Formula (3). Fn3 is an index of the hydrogen embrittlement resistance of an austenitic stainless steel material that satisfies feature 1. As mentioned above, in the austenitic stainless steel material of the present embodiment, excellent hydrogen embrittlement resistance is exhibited as a result of an effect whereby interfacial concentration of planar dislocations is suppressed by NbV precipitates. If Fn3 is less than 0.15, even if Fn1 satisfies Formula (1), NbV precipitates will not precipitate sufficiently. Consequently, sufficient hydrogen embrittlement resistance will not be obtained in the austenitic stainless steel material. Therefore, in the austenitic stainless steel material of the present embodiment, Fn3 is 0.15 or more.

A preferable lower limit of Fn3 is 0.18, more preferably is 0.20, further preferably is 0.25, further preferably is 0.30, further preferably is 0.35, and further preferably is 0.40.

The upper limit of Fn3 is not particularly limited. However, when the chemical composition of an austenitic stainless steel material satisfies feature 1, the upper limit of Fn3 is 2.00.

[(Feature 3) Regarding grain size number of austenitic stainless steel material]

In the austenitic stainless steel material of the present embodiment, the grain size number of austenite grains determined in accordance with ASTM E112 is 8.5 or more. Here, "ASTM" is an abbreviation of "American Society for Testing and Material".

If the austenite grain size number is less than 8.5, the grains are coarse. In such a case, sufficient strength is not obtained. Therefore, the grain size number of the austenitic stainless steel material is 8.5 or more.

A preferable lower limit of the grain size number is 8.6, more preferably is 8.7, further preferably is 9.0, and further preferably is 9.3.

Although not particularly limited, the upper limit of the grain size number is, for example, 12.0, or for example 11.5, or for example 10.0.

[Method for measuring grain size number]

The grain size number of austenite grains is determined by the following method. The austenitic stainless steel material is cut perpendicularly to the longitudinal direction. A cross section perpendicular to the longitudinal direction of the steel material is referred to as "observation surface".

If the austenitic stainless steel material is a steel pipe, a sample is taken from the center position of the wall thickness of the cut surface. If the austenitic stainless steel material is a steel bar, a sample is taken from an R/2 position of the cut surface. Here, the term "R/2 position" means the center position of a radius R of the cut surface. Note that, the cut surface of a steel bar is a round shape with a radius R. If the austenitic stainless steel material is a steel plate, a sample is taken from a position which is the center position of the plate width and is the center position of the plate thickness.

Among the surfaces of the sample that is taken, a surface corresponding to the aforementioned cut surface is adopted as a surface to be examined. The surface to be examined of the sample is mirror-polished. The mirror-polished surface to be examined is then subjected to etching using a mixed acid (solution in which hydrochloric acid and nitric acid are mixed at a ratio of 1:1) to reveal austenite grain boundaries. Microstructural observation of the surface to be examined of the sample is performed using an optical microscope. The magnification of the optical microscope for the microstructural observation is set to 100×. An arbitrary three visual fields are selected on the surface to be examined of the sample. The size of each visual field is set to 1000 $\mu$m $\times$ 1000 $\mu$m. In each visual field, the austenite grain size number is measured in accordance with ASTM E112. The arithmetic mean value of the austenite grain size numbers obtained in the three visual fields is defined as the grain size number of the austenitic stainless steel material.

[(Feature 4) Regarding residue obtained by extraction residue method]

In the austenitic stainless steel material of the present embodiment, in addition, when the chemical composition of the austenitic stainless steel material is taken as 100% in percent by mass, the total content of Nb, V, Cr, N, and C in a residue obtained by the extraction residue method is 0.090 to 0.425% in percent by mass, and the content of Cr in the residue is 0.180% or less in percent by mass.

When the chemical composition of the austenitic stainless steel material is taken as 100% in percent by mass, the total content of Nb, V, Cr, N, and C in a residue obtained by the extraction residue method is defined as the residue total content (mass%). Further, when the chemical composition of the austenitic stainless steel material is taken as 100% in percent by mass, the content of Cr (mass%) in a residue obtained by the extraction residue method is also referred to as the "residue Cr content". The residue total content and the residue Cr content are indexes of the types of precipitates and the amount of precipitates in the austenitic stainless steel material. When the residue total content is less than 0.090%, the amount of NbV precipitates is not sufficient. In this case, NbV precipitates cannot sufficiently inhibit the motion of dislocations. Consequently, concentration of dislocations at interfaces that serve as fracture initiation sites will occur, and sufficient hydrogen embrittlement resistance will not be obtained.

On the other hand, when the residue total content is more than 0.425%, the amount of precipitates is excessively large. In this case, precipitates are formed not only within grains, but are also formed excessively at grain boundaries. Consequently, the strength of grain boundaries that serve as fracture initiation sites decreases, and sufficient hydrogen embrittlement resistance is not obtained. Further, even when the residue total content is 0.425% or less, if the residue Cr content is more than 0.180%, the proportion of Cr carbides among the precipitates is excessively large as compared to the proportion of NbV precipitates. Cr carbides precipitate at grain boundaries, and therefore in this case also the grain boundary strength decreases. As a result, sufficient hydrogen embrittlement resistance is not obtained.

When the residue total content is 0.090 to 0.425% and the residue Cr content is 0.180% or less, a sufficient amount of NbV precipitates that inhibit the motion of dislocations is formed in the austenite grains. Therefore, the motion of dislocations is sufficiently suppressed, and excellent hydrogen embrittlement resistance is obtained.

A preferable lower limit of the residue total content is 0.095%, more preferably is 0.100%, further preferably is 0.120%, and further preferably is 0.150%.

A preferable upper limit of the residue total content is 0.400%, more preferably is 0.380%, and further preferably is 0.360%.

A preferable upper limit of the residue Cr content is 0.170%, more preferably is 0.160%, and further preferably is 0.150%.

The residue Cr content is preferably as low as possible. A preferable lower limit of the residue Cr content is, for example, 0.010%, or for example 0.020%.

[Method for measuring residue total content and residue Cr content]

The residue total content and the residue Cr content of the austenitic stainless steel material can be measured by the following method.

Two test specimens are taken from the austenitic stainless steel material.

If the austenitic stainless steel material is a steel pipe, the two test specimens are taken from the center position of the wall thickness. Each test specimen is to be a round bar shape with a diameter of 8 mm and a length of 50 mm. The longitudinal direction of each test specimen is to be the pipe axis direction of the steel pipe.

If the austenitic stainless steel material is a steel bar, the two test specimens are taken from an R/2 position of a cross section perpendicular to the axial direction. Each test specimen is to be a round bar shape with a diameter of 8 mm and a length of 50 mm. The longitudinal direction of each test specimen is to be the axial direction of the steel bar.

If the austenitic stainless steel material is a steel plate, the two test specimens are taken from a position which is the center position of the plate width and is the center position of the plate thickness. Each test specimen is to be a round bar shape with a diameter of 8 mm and a length of 50 mm. The longitudinal direction of each test specimen is to be the rolling elongation direction of the steel plate.

One test specimen among the two test specimens is subjected to constant current electrolysis using a 10% AA-based solution (a solution that contains 10 vol% acetylacetone and a methanol solution containing 1 mass% tetramethylammonium chloride).

Specifically, the aforementioned 10% AA-based solution is prepared. Then, using the 10% AA-based solution, the test specimen is subjected to constant current electrolysis at normal temperature while maintaining the current density at 20 mA/cm$^2$. After the constant current electrolysis, the test specimen is taken out from the 10% AA-based solution. After being taken out, the test specimen is immersed in an alcohol solution. The test specimen immersed in the alcohol solution is subjected to ultrasonic cleaning.

The 10% AA-based solution used in the constant current electrolysis, and the alcohol solution used in the ultrasonic cleaning thereafter are suction filtered through a filter with a mesh size of 0.2 $\mu$m to extract residue.

The extracted residue is subjected to chemical elemental analysis. Specifically, the residue filtered through the filter with the mesh size of 0.2 $\mu$m is dissolved in acid to obtain a solution. The solution is subjected to chemical elemental analysis using inductively coupled plasma-optical emission spectrometry (ICP-OES) to obtain the Nb mass, V mass, Cr mass, and N mass in the residue.

The content of Nb (mass%), content of V (mass%), residue Cr content (mass%), and content of N (mass%) in the residue obtained by the extraction residue method when taking the chemical composition of the steel material as 100% in percent by mass are determined based on the obtained Nb mass, V mass, Cr mass, and N mass in the residue, and the total mass of the residue and the test specimen dissolved by the constant current electrolysis.

In addition, the other test specimen among the two test specimens is subjected to constant current electrolysis by the same method as the method described above. After the constant current electrolysis, the test specimen is taken out from the 10% AA-based solution. After being taken out, the test specimen is immersed in an alcohol solution. The test specimen immersed in the alcohol solution is subjected to ultrasonic cleaning. The 10% AA-based solution used in the constant current electrolysis, and the alcohol solution used in the ultrasonic cleaning thereafter are suction filtered through a filter with a mesh size of 0.3 μm to extract residue. The residue filtered through a 0.3 μm glass filter is subjected to high-frequency combustion, and the mass of C in the residue is obtained by an infrared absorption method.

The total mass of the mass of the test specimen dissolved by the constant current electrolysis and the mass of the residue is determined based on the mass of the test specimen before the constant current electrolysis and the mass of the test specimen after the constant current electrolysis. The content of C (mass%) in the residue obtained by the extraction residue method when taking the chemical composition of the steel material as 100% in percent by mass is determined based on the obtained mass of C in the residue and the total mass of the test specimen dissolved by the constant current electrolysis and the residue.

The total content of the obtained content of Nb (mass%), content of V (mass%), residue Cr content (mass%), and content of N (mass%) in the residue, and the content of C (mass%) in the residue is defined as the residue total content (mass%).

[Advantageous effects of austenitic stainless steel material of present embodiment]

As described above, the austenitic stainless steel material of the present embodiment satisfies feature 1 to feature 4. Therefore, in the austenitic stainless steel material of the present embodiment, excellent hydrogen embrittlement resistance in a high-pressure hydrogen gas environment and high strength can both be achieved.

In the present embodiment, the phrase "has high strength" means that the tensile strength is 750 MPa or more.

A preferable lower limit of the tensile strength is 755 MPa, more preferably is 760 MPa, further preferably is 770 MPa, and further preferably is 780 MPa.

A further preferable lower limit of the tensile strength is 800 MPa, further preferably is 805 MPa, and further preferably is 810 MPa.

Although not particularly limited, the upper limit of the tensile strength is, for example, 1000 MPa, or for example 900 MPa.

Preferably, in the austenitic stainless steel material of the present embodiment, the grain size number is 9.0 or more, and in addition, the tensile strength is 800 MPa or more. In this case, further higher strength and excellent hydrogen embrittlement resistance in a high-pressure hydrogen gas environment can both be achieved.

[Method for measuring tensile strength]

The tensile strength of the austenitic stainless steel material is determined by the following method.

A round bar tensile test specimen is taken from the austenitic stainless steel material. Specifically, if the austenitic stainless steel material is a steel pipe, a round bar tensile test specimen is taken from the center position of the wall thickness. The longitudinal direction of the round bar tensile test specimen is to be parallel to the pipe axis direction of the steel pipe. If the austenitic stainless steel material is a steel bar, the round bar tensile test specimen is taken from an R/2 position. The longitudinal direction of the round bar tensile test specimen is to be parallel to the axial direction of the steel bar. If the austenitic stainless steel material is a steel plate, the round bar tensile test specimen is taken from a position which is the center position of the plate width and is the center position of the plate thickness. The longitudinal direction of the round bar tensile test specimen is to be parallel to the rolling elongation direction of the steel plate. The round bar specimen is to be a JIS No. 14A specimen defined in JIS Z 2241: 2011, and the diameter of the parallel portion is to be 8.0 mm.

A tensile test is conducted on the round bar tensile test specimen in accordance with JIS Z 2241: 2011 in the atmosphere at normal temperature, and the tensile strength (MPa) is thereby determined.

[Shape of austenitic stainless steel material of present embodiment]

The shape of the austenitic stainless steel material of the present embodiment is not particularly limited. The austenitic stainless steel material of the present embodiment may be a steel pipe, may be a steel bar, or may be a steel plate.

[Regarding applications of austenitic stainless steel material of present embodiment]

The austenitic stainless steel material of the present embodiment can be widely applied to applications which require hydrogen embrittlement resistance and high strength. In particular, austenitic stainless steel material of the present embodiment is suitable for applications for which hydrogen embrittlement resistance and high strength are required, and for which yield strength stability is also required. Such kinds of applications include, for example, steel materials for fuel tanks of transportation equipment which utilizes hydrogen as energy, and steel materials for pipes which connect a fuel tank to a combustion chamber. Note that, the austenitic stainless steel material of the present embodiment is not limited to applications for transportation equipment which utilizes high-pressure hydrogen gas as energy, or hydrogen stations which supply hydrogen gas to transportation equipment. As mentioned above, the austenitic stainless steel material of the present embodiment can be widely applied to applications which require strength and/or hydrogen embrittlement resistance.

[Method for producing austenitic stainless steel material of present embodiment]

Hereunder, a method for producing the austenitic stainless steel material of the present embodiment is described. The method for producing an austenitic stainless steel material that is described hereunder is one example of a method for producing the austenitic stainless steel material of the present embodiment. Accordingly, an austenitic stainless steel material having the structure described above may also be produced by another production method other than the production method described hereunder. However, the production method described hereunder is a preferable example of the method for producing the austenitic stainless steel material of the present embodiment.
One example of the method for producing the austenitic stainless steel material of the present embodiment includes the following processes.

(Process 1) Preparation process
(Process 2) Hot working process
(Process 3) First heat treatment process

Hereunder, each process is described in detail.

[(Process 1) Preparation process]

In the preparation process, a starting material that satisfies feature 1 and feature 2 is prepared. In the case of producing the starting material, for example, the starting material is produced by the following method.
Molten steel having a chemical composition that satisfies feature 1 and feature 2 is produced by a well-known method. The produced molten steel is used to produce a cast material by a well-known casting process. For example, an ingot is produced by an ingot-making process. A cast piece (a slab, a bloom, a billet or the like) may be produced by a continuous casting process. The ingot may be subjected to hot working such as blooming or hot forging to produce a slab, a bloom or a billet. The starting material is produced by the above process.

[(Process 2) Hot working process]

The prepared starting material is subjected to hot working (hot working process). The hot working is, for example, hot forging, hot rolling, or hot extrusion or the like. The hot forging is, for example, extend forging. As the hot rolling, for example, multi-pass rolling is performed using a reverse rolling mill or a tandem rolling mill. The hot extrusion is, for example, hot extrusion by the Ugine-Sejournet process. Other hot working may be performed after the hot forging. An intermediate steel material is produced by the above production process. The heating temperature before the hot working is, for example, 950 to 1100°C. The reduction of area in the hot working is, for example, 50% or more. In the case of performing multiple types of hot working, for example, in the case of performing hot forging and thereafter performing hot rolling, for example, the heating temperature before each type of hot working is set in the range of 950 to 1100°C, and the cumulative reduction of area in the multiple types of hot working is to be, for example, 50% or more.
The finishing temperature in the hot working process is 900°C or more. Here, the term "finishing temperature" means the surface temperature of the intermediate steel material immediately after performing the final hot working. For example, if the hot working is hot rolling, the term "finishing temperature" means the surface temperature of the intermediate steel material on the exit side of the roll stand that performed the final rolling. If the hot working is hot extrusion, the term "finishing temperature" means the surface temperature of the intermediate steel material on the exit side of the die. If the hot working is hot forging, the term "finishing temperature" means the surface temperature of the intermediate steel material immediately after the final rolling reduction is applied. The finishing temperature can be measured with, for example, a thermometer such as a radiation thermometer or thermography.

In the hot working process, the following conditions are satisfied.

(Condition 1)

An average cooling rate CR of the intermediate steel material from the finishing temperature to a rapid cooling start temperature is to be 0.5 to 1.2°C/sec.

(Condition 2)

The rapid cooling start temperature is to be 800 to 700°C.

[Regarding condition 1 and condition 2]

The average cooling rate CR of the intermediate steel material from the finishing temperature to the rapid cooling start temperature influences the amount of NbV precipitates that are formed. If the average cooling rate CR is less than 0.5°C/sec, in the intermediate steel material after hot working, NbV precipitates (Nb precipitates, V precipitates, and composite precipitates containing Nb and V) will excessively form, or Cr carbides will excessively form at grain boundaries. In such a case, in the first heat treatment process that is the next process, it will be difficult for NbV precipitates to newly form, and NbV precipitates and Cr carbides that are already present in the intermediate steel material will grow coarsely. As a result, in the produced austenitic stainless steel material, in the residue, the residue total content will be too large or the residue Cr content will be too large.

On the other hand, if the average cooling rate CR is more than 1.2°C/sec, the formed amount of NbV precipitates will be insufficient. As a result, in the produced austenitic stainless steel material, a sufficient residue total content will not be obtained in the residue.

Therefore, a preferable average cooling rate CR of the intermediate steel material from the finishing temperature to the rapid cooling start temperature is 0.5 to 1.2°C/sec.

Further, when the rapid cooling start temperature is more than 800°C, the rapid cooling start temperature is too high. In this case, the formed amount of NbV precipitates will be insufficient. As a result, in the produced austenitic stainless steel material, a sufficient residue total content will not be obtained in the residue.

On the other hand, when the rapid cooling start temperature is less than 700°C, the rapid cooling start temperature is too low. In this case, in the intermediate steel material after hot working, NbV precipitates will excessively form, or Cr carbides will excessively form at grain boundaries. As a result, in the produced austenitic stainless steel material, in the residue, the residue total content will be too large or the residue Cr content will be too large.

Therefore, the rapid cooling start temperature is to be within the range of 800 to 700°C. Note that, the rapid cooling is to be performed by water cooling.

[(Process 3) First heat treatment process]

In the first heat treatment process, the intermediate steel material having the chemical composition described above is subjected to a heat treatment. Specifically, the intermediate steel material is held at a heat treatment temperature T1 (°C) for a holding time t1 (min). After the holding time passes, the intermediate steel material is rapidly cooled. The rapid cooling is, for example, water cooling or oil cooling. In the first heat treatment process, the following condition is satisfied.

(Condition 3)

The heat treatment temperature T1 is set within the range of 950 to 1200°C, and the holding time t1 at the heat treatment temperature T1 is set within the range of 5 to 30 minutes.

[Regarding condition 3]

If the heat treatment temperature T1 is less than 950°C, or the holding time t1 is less than five minutes, a sufficient amount of NbV precipitates will not form during the heat treatment. Consequently, sufficient strength will not be obtained in the austenitic stainless steel material. On the other hand, if the heat treatment temperature T1 is more than 1200°C, or if the holding time t1 is more than 30 minutes, NbV precipitates that formed after the hot working process will melt. Consequently, sufficient strength will not be obtained in the austenitic stainless steel material. Therefore, the heat treatment temperature T1 is 950 to 1200°C, and the holding time t1 is 5 to 30 minutes.

Note that, a preferable lower limit of the heat treatment temperature T1 is 1050°C.

The austenitic stainless steel material that satisfies feature 1 to feature 4 can be produced by the above production process.

[Preferable production conditions]

Preferably, the method for producing the austenitic stainless steel material of the present embodiment further includes, after the first heat treatment process, the following cold working process (process 4), and second heat treatment process (process 5).

(Process 4) Cold working process
(Process 5) Second heat treatment process

Process 4 and process 5 are described hereunder.

[(Process 4) Cold working process]

In the cold working process, the intermediate steel material after the first heat treatment process is subjected to cold working after the intermediate steel material has been subjected to a pickling treatment. If the intermediate steel material is a steel pipe or a steel bar, the cold working is, for example, cold drawing. If the intermediate steel material is a steel plate, the cold working is, for example, cold rolling. By performing the cold working process, strain is imparted to the intermediate steel material before the second heat treatment process. This allows development of recrystallization and grain refinement to occur during the second heat treatment process. As a result, the grains of the produced austenitic stainless steel material can be made finer grains.

A reduction of area RD in the cold working process is 10 to 60%. If the reduction of area RD is 10% or more, the grain size number will be 9.0 or more. Note that, although production is possible even when the reduction of area RD is more than 60%, if the reduction of area is high, the risk of a crack occurring at an edge will increase. Therefore, the reduction of area RD is 10 to 60%.

[(Process 5) Second heat treatment process]

In the second heat treatment process, the intermediate steel material after the cold working is subjected to a heat treatment. Specifically, the intermediate steel material is held at a heat treatment temperature T2 (°C) for a holding time t2 (min). After the holding time passes, the intermediate steel material is rapidly cooled. The rapid cooling is, for example, water cooling or oil cooling. In the second heat treatment process, the heat treatment temperature T2 is to be set within the range of 950 to 1150°C, and the holding time t2 at the heat treatment temperature T2 is to be set within the range of 5 to 30 minutes.

If the heat treatment temperature T2 is less than 950°C, or the holding time t2 is less than five minutes, a sufficient amount of NbV precipitates will not form during the heat treatment. On the other hand, if the heat treatment temperature T2 is more than 1150°C, or if the holding time t2 is more than 30 minutes, NbV precipitates that formed during the first heat treatment process will excessively melt. Consequently, sufficient strength will not be obtained in the austenitic stainless steel material. Therefore, the heat treatment temperature T2 is 950 to 1150°C, and the holding time t2 is 5 to 30 minutes.

If the above production process 4 and production process 5 are performed, the grain size number of the austenitic stainless steel material will be 9.0 or more and the tensile strength will be 800 MPa or more.

EXAMPLE 1

The advantageous effects of the austenitic stainless steel material of the present embodiment will now be described more specifically by way of examples. The conditions adopted in the following examples are one example of conditions adopted for confirming the feasibility and advantageous effects of the austenitic stainless steel material of the present embodiment. Accordingly, the austenitic stainless steel material of the present embodiment is not limited to this one example of conditions.

Austenitic stainless steel materials (steel plates) having the chemical compositions shown in Table 1 (Table 1-1 and Table 1-2) were produced by the following method.

[Table 1-1]

| Test No. | Chemical composition (unit is mass%, the balance is Fe and impurities) | | | | | | | | | | | |
| --- | --- | --- | --- | --- | --- | --- | --- | --- | --- | --- | --- | --- |
| | C | Si | Mn | P | S | Cr | Ni | Al | N | O | Nb | V |
| 1 | 0.077 | 0.81 | 2.52 | 0.021 | 0.001 | 20.1 | 9.5 | 0.010 | 0.25 | 0.006 | 0.15 | - |
| 2 | 0.077 | 0.81 | 2.52 | 0.021 | 0.001 | 20.1 | 9.5 | 0.010 | 0.25 | 0.006 | 0.15 | - |
| 3 | 0.040 | 0.87 | 2.50 | 0.028 | 0.001 | 18.4 | 8.8 | 0.002 | 0.22 | 0.004 | 0.11 | 0.10 |
| 4 | 0.041 | 0.91 | 2.50 | 0.027 | 0.001 | 18.5 | 8.5 | 0.006 | 0.23 | 0.003 | 0.11 | 0.30 |
| 5 | 0.079 | 0.79 | 2.59 | 0.022 | 0.001 | 20.2 | 9.5 | 0.006 | 0.32 | 0.007 | 0.15 | 1.00 |
| 6 | 0.060 | 0.78 | 2.29 | 0.023 | 0.001 | 19.8 | 7.8 | 0.001 | 0.26 | 0.004 | 0.13 | 0.30 |
| 7 | 0.080 | 0.20 | 0.50 | 0.020 | 0.002 | 21.5 | 11.5 | 0.002 | 0.42 | 0.007 | 0.13 | 0.29 |
| 8 | 0.120 | 0.24 | 2.32 | 0.020 | 0.002 | 22.3 | 8.8 | 0.001 | 0.30 | 0.006 | 0.15 | 0.28 |
| 9 | 0.010 | 0.10 | 2.30 | 0.020 | 0.003 | 20.1 | 9.5 | 0.008 | 0.31 | 0.004 | 0.10 | 0.15 |
| 10 | 0.030 | 0.40 | 0.80 | 0.020 | 0.001 | 24.0 | 10.1 | 0.008 | 0.33 | 0.001 | - | 0.16 |
| 11 | 0.080 | 0.80 | 2.10 | 0.018 | 0.001 | 17.4 | 10.0 | 0.050 | 0.18 | 0.007 | 0.35 | 0.01 |
| 12 | 0.040 | 0.40 | 6.90 | 0.022 | 0.001 | 18.5 | 6.5 | 0.001 | 0.40 | 0.003 | 0.18 | 0.27 |
| 13 | 0.077 | 0.81 | 2.52 | 0.021 | 0.001 | 20.1 | 9.5 | 0.010 | 0.25 | 0.006 | 0.15 | - |
| 14 | 0.005 | 0.30 | 2.40 | 0.023 | 0.006 | 18.6 | 9.0 | 0.004 | 0.25 | 0.007 | 0.10 | 0.21 |
| 15 | 0.012 | 0.30 | 0.50 | 0.021 | 0.001 | 22.0 | 9.5 | 0.006 | 0.30 | 0.006 | 0.11 | 0.15 |
| 16 | 0.030 | 0.81 | 2.50 | 0.021 | 0.001 | 19.5 | 8.8 | 0.004 | 0.28 | 0.008 | 0.11 | 0.24 |
| 17 | 0.077 | 0.82 | 2.30 | 0.021 | 0.001 | 19.8 | 8.3 | 0.010 | 0.13 | 0.009 | 0.09 | - |
| 18 | 0.071 | 0.42 | 2.50 | 0.025 | 0.001 | 20.0 | 7.5 | 0.004 | 0.23 | 0.005 | 0.08 | 0.01 |
| 19 | 0.019 | 0.78 | 2.05 | 0.023 | 0.001 | 18.8 | 8.8 | 0.005 | 0.24 | 0.002 | - | - |
| 20 | 0.030 | 0.41 | 2.30 | 0.020 | 0.001 | 22.1 | 7.5 | 0.040 | 0.15 | 0.001 | 0.11 | 0.28 |
| 21 | 0.030 | 0.80 | 1.80 | 0.024 | 0.004 | 18.5 | 12.3 | 0.006 | 0.19 | 0.006 | 0.11 | 0.11 |
| 22 | 0.077 | 0.81 | 2.52 | 0.021 | 0.001 | 20.1 | 9.5 | 0.010 | 0.25 | 0.006 | 0.15 | - |
| 23 | 0.077 | 0.81 | 2.52 | 0.021 | 0.001 | 20.1 | 9.5 | 0.010 | 0.25 | 0.006 | 0.15 | - |
| 24 | 0.077 | 0.81 | 2.52 | 0.021 | 0.001 | 20.1 | 9.5 | 0.010 | 0.25 | 0.006 | 0.15 | - |
| 25 | 0.077 | 0.81 | 2.52 | 0.021 | 0.001 | 20.1 | 9.5 | 0.010 | 0.25 | 0.006 | 0.15 | - |
| 26 | 0.077 | 0.81 | 2.52 | 0.021 | 0.001 | 20.1 | 9.5 | 0.010 | 0.25 | 0.006 | 0.15 | - |

[Table 1-2]

| Test No. | Chemical composition (unit is mass%, the balance is Fe and impurities) | | | | | | Fn1 | Fn2 | Fn3 |
| --- | --- | --- | --- | --- | --- | --- | --- | --- | --- |
| | Mo | B | Cu | Co | Ca | REM | | | |
| 1 | - | - | - | - | - | - | 0.58 | 22.2 | 0.15 |
| 2 | - | - | - | - | - | - | 0.58 | 22.2 | 0.15 |
| 3 | - | - | - | - | - | - | 0.48 | 20.3 | 0.21 |
| 4 | - | - | - | - | - | - | 0.50 | 19.2 | 0.41 |
| 5 | - | - | - | - | - | - | 0.72 | 20.7 | 1.15 |
| 6 | 0.50 | - | - | - | - | - | 0.58 | 18.2 | 0.43 |
| 7 | - | - | - | - | 0.035 | - | 0.92 | 23.9 | 0.42 |
| 8 | - | - | - | - | - | - | 0.72 | 21.0 | 0.43 |

(continued)

| Test No. | Chemical composition (unit is mass%, the balance is Fe and impurities) | | | | | | Fn1 | Fn2 | Fn3 |
|---|---|---|---|---|---|---|---|---|---|
| | Mo | B | Cu | Co | Ca | REM | | | |
| 9 | - | - | - | - | - | - | 0.63 | 22.4 | 0.25 |
| 10 | - | - | - | - | - | - | 0.69 | 23.6 | 0.16 |
| 11 | - | - | - | - | - | - | 0.44 | 23.6 | 0.36 |
| 12 | - | - | - | - | - | - | 0.84 | 14.1 | 0.45 |
| 13 | - | - | - | - | - | - | 0.58 | 22.2 | 0.15 |
| 14 | - | - | 0.30 | 0.02 | - | - | 0.51 | 21.5 | 0.31 |
| 15 | 1.00 | - | - | - | - | - | 0.61 | 23.8 | 0.26 |
| 16 | - | 0.0015 | - | - | - | 0.005 | 0.59 | 19.6 | 0.35 |
| 17 | 0.10 | - | - | - | - | - | 0.34 | 21.7 | 0.09 |
| 18 | - | - | - | - | - | - | 0.53 | 18.1 | 0.09 |
| 19 | - | - | - | - | - | - | 0.50 | 20.0 | 0.00 |
| 20 | - | - | - | - | - | - | 0.33 | 21.1 | 0.39 |
| 21 | - | - | - | - | - | - | 0.41 | 30.2 | 0.22 |
| 22 | - | - | - | - | - | - | 0.58 | 22.2 | 0.15 |
| 23 | - | - | - | - | - | - | 0.58 | 22.2 | 0.15 |
| 24 | - | - | - | - | - | - | 0.58 | 22.2 | 0.15 |
| 25 | - | - | - | - | - | - | 0.58 | 22.2 | 0.15 |
| 26 | - | - | - | - | - | - | 0.58 | 22.2 | 0.15 |

Specifically, 180-kg ingots were produced by vacuum melting. The produced ingots were subjected to hot forging, and thereafter subjected to hot rolling to produce steel plates (intermediate steel materials) of 200 mm in width × 20 mm in thickness. Note that, for each test number, the heating temperature before hot forging, and the heating temperature before hot rolling were each in the range of 950 to 1100°C, and the cumulative reduction of area in the hot working (hot forging and hot rolling) was 50%. The finishing temperature of the hot working was 900°C or more. The average cooling rate CR (°C/sec) from the finishing temperature to the rapid cooling start temperature, and the rapid cooling start temperature (°C) were as shown in Table 2. Water cooling was performed as the rapid cooling.

[Table 2]

| Test No. | Average cooling rate CR (°C/s) | Rapid cooling start temperature (°C) | Heat treatment temperature T1 (°C) |
|---|---|---|---|
| 1 | 1.0 | 750 | 1060 |
| 2 | 1.0 | 750 | 1150 |
| 3 | 1.1 | 750 | 1060 |
| 4 | 1.0 | 750 | 1060 |
| 5 | 0.9 | 750 | 1060 |
| 6 | 0.9 | 750 | 1060 |
| 7 | 0.8 | 750 | 1060 |
| 8 | 1.0 | 750 | 1060 |
| 9 | 0.5 | 750 | 1060 |
| 10 | 0.9 | 750 | 1060 |
| 11 | 1.0 | 750 | 1060 |

(continued)

| Test No. | Average cooling rate CR (°C/s) | Rapid cooling start temperature (°C) | Heat treatment temperature T1 (°C) |
|---|---|---|---|
| 12 | 1.0 | 750 | 1060 |
| 13 | 1.1 | 750 | 1060 |
| 14 | 0.8 | 750 | 1060 |
| 15 | 1.0 | 750 | 1060 |
| 16 | 1.0 | 750 | 1060 |
| 17 | 1.0 | 750 | 1060 |
| 18 | 0.8 | 750 | 1060 |
| 19 | 1.0 | 750 | 1060 |
| 20 | 0.7 | 750 | 1060 |
| 21 | 1.0 | 750 | 1060 |
| 22 | 0.8 | 750 | 1250 |
| 23 | 0.1 | 750 | 1060 |
| 24 | 1.0 | 600 | 1060 |
| 25 | 10.0 | 750 | 1060 |
| 26 | 1.0 | 900 | 1060 |

The intermediate steel material after cooling was subjected to the first heat treatment process. The heat treatment temperature T1 (°C) in the first heat treatment process was as shown in Table 2. Note that, the holding time t1 (min) was 15 minutes in each test number. The intermediate steel material was water-cooled immediately after extraction from the heat treatment furnace. Austenitic stainless steel materials (steel plates) were produced by the above production process.

[Evaluation tests]

The austenitic stainless steel material of each test number was subjected to the following tests.

(Test 1) Grain size measurement test

(Test 2) Test to measure residue total content and residue Cr content in residue

(Test 3) Tensile strength measurement test

(Test 4) Hydrogen embrittlement resistance evaluation test

Test 1 to test 4 are described hereunder.

[(Test 1) Grain size measurement test]

The grain size number of the austenitic stainless steel material of each test number was determined in accordance with the method described above in the section [Method for measuring grain size number]. The determined grain size number is shown in Table 3. In Table 3, "<0.001" in the column "Residue Cr Content (mass%)" indicates that the residue Cr content was less than or equal to the detection limit (that is, less than 0.001%).

[Table 3]

| Test No. | Grain size number | Residue Cr content (mass%) | Residue total content (mass%) | 0.2% proof stress (MPa) | Tensile strength (MPa) | Relative breaking elongation (%) | Remarks |
|---|---|---|---|---|---|---|---|
| 1 | 8.9 | 0.031 | 0.109 | 412 | 758 | 87 | Inventive Example |
| 2 | 8.8 | 0.011 | 0.143 | 402 | 751 | 90 | Inventive Example |
| 3 | 8.7 | 0.023 | 0.106 | 416 | 760 | 85 | Inventive Example |
| 4 | 9.1 | 0.018 | 0.150 | 434 | 776 | 86 | Inventive Example |
| 5 | 9.3 | 0.080 | 0.420 | 412 | 762 | 97 | Inventive Example |
| 6 | 8.8 | 0.019 | 0.138 | 454 | 800 | 88 | Inventive Example |
| 7 | 9.3 | 0.054 | 0.180 | 460 | 780 | 90 | Inventive Example |
| 8 | 9.3 | 0.080 | 0.228 | 490 | 820 | 87 | Inventive Example |
| 9 | 8.9 | 0.032 | 0.110 | 454 | 800 | 99 | Inventive Example |
| 10 | 8.8 | <0.001 | 0.139 | 461 | 753 | 101 | Inventive Example |
| 11 | 8.9 | 0.118 | 0.280 | 402 | 752 | 82 | Inventive Example |
| 12 | 9.3 | 0.077 | 0.225 | 501 | 820 | 95 | Inventive Example |
| 13 | 8.9 | 0.008 | 0.093 | 407 | 754 | 99 | Inventive Example |
| 14 | 8.8 | 0.176 | 0.278 | 448 | 764 | 85 | Inventive Example |
| 15 | 9.2 | 0.024 | 0.222 | 431 | 792 | 96 | Inventive Example |
| 16 | 9.1 | <0.001 | 0.167 | 432 | 764 | 89 | Inventive Example |
| 17 | 8.6 | 0.022 | 0.082 | 382 | 707 | 70 | Comparative Example |
| 18 | 8.5 | <0.001 | 0.086 | 450 | 774 | 68 | Comparative Example |
| 19 | 7.9 | <0.001 | 0.002 | 348 | 690 | 65 | Comparative Example |
| 20 | 9.1 | 0.024 | 0.230 | 374 | 721 | 87 | Comparative Example |
| 21 | 9.3 | 0.053 | 0.296 | 384 | 736 | 98 | Comparative Example |
| 22 | 7.8 | 0.043 | 0.084 | 371 | 680 | 81 | Comparative Example |
| 23 | 8.8 | 0.198 | 0.433 | 410 | 761 | 78 | Comparative Example |
| 24 | 8.8 | 0.370 | 0.478 | 431 | 798 | 75 | Comparative Example |
| 25 | 8.7 | <0.001 | 0.061 | 421 | 771 | 76 | Comparative Example |
| 26 | 8.8 | <0.001 | 0.063 | 412 | 763 | 77 | Comparative Example |

[(Test 2) Test to measure residue total content and residue Cr content in residue]

The residue total content (mass%) and the residue Cr content of the austenitic stainless steel material of each test number were determined in accordance with the method described above in the section [Method for measuring residue total content and residue Cr content]. Note that, the test specimens were taken from a position that was at the center position of the plate width and was also at the center position of the plate thickness. Each test specimen was a round bar shape with a diameter of 8 mm and a length of 50 mm. The longitudinal direction of each test specimen was parallel to the rolling elongation direction of the steel plate. The content of Cr (residue Cr content) (mass%) in the obtained residue, and the residue total content (mass%) are shown in Table 3.

[(Test 3) Tensile strength measurement test]

The tensile strength of the austenitic stainless steel material of each test number was determined in accordance with the method described above in the section [Method for measuring tensile strength]. The determined 0.2% proof stress (MPa) and the determined tensile strength (MPa) are shown in Table 3.

[(Test 4) Hydrogen embrittlement resistance evaluation test]

The austenitic stainless steel material of each test number was subjected to a slow strain rate test (SSRT). Specifically, a plurality of round bar tensile test specimens were prepared from a position that was at the center position of the plate width and was also at the center position of the plate thickness of the austenitic stainless steel material (steel plate). The diameter of the parallel portion of the round bar tensile test specimen was 2.5 mm, and the parallel portion was parallel to the longitudinal direction (corresponds to rolling elongation direction) of the steel plate. The central axis of the parallel portion approximately coincided with the center position of the plate thickness of the steel plate.

The surface of the parallel portion of each round bar tensile test specimen was polished with #150, #400, and #600 emery paper in that order, and thereafter degreased with acetone. One of the obtained round bar tensile test specimens was used to carry out a tensile test at normal temperature in the atmosphere at a strain rate of $3.0 \times 10^{-5}$/sec, and the breaking elongation (unit is %) was obtained.

In addition, using another of the round bar tensile test specimens was used to carry out a tensile test at normal temperature in hydrogen gas at 90 MPa at a strain rate of $3.0 \times 10^{-5}$/sec, and the breaking elongation (%) was obtained. The relative breaking elongation (%) of each test number was determined using the following equation.

Relative breaking elongation = breaking elongation in hydrogen gas at 90 MPa/breaking elongation in the atmosphere $\times$ 100

The determined relative breaking elongation (%) is shown in Table 3.

[Test results]

Referring to Table 1 (Table 1-1 and Table 1-2), Table 2, and Table 3, in Test Nos. 1 to 16, feature 1 to feature 4 were satisfied. Therefore, the tensile strength was 750 MPa or more, and thus high strength was obtained. In addition, the relative breaking elongation was 80% or more, and thus excellent hydrogen embrittlement resistance was obtained.

On the other hand, in Test No. 17 the content of N was too low. In addition, Fn1 and Fn3 were too low. Furthermore, the residue total content was too small. Therefore, the tensile strength was less than 750 MPa, and thus sufficient strength was not obtained. In addition, the relative breaking elongation was less than 80%, and thus sufficient hydrogen embrittlement resistance was not obtained.

In Test No. 18, Fn3 was low, and thus the residue total content was low. Therefore, the relative breaking elongation was less than 80%, and thus sufficient hydrogen embrittlement resistance was not obtained.

In Test No. 19, Nb and V were not contained. Consequently, the grain size number was less than 8.5. As a result, the tensile strength was less than 750 MPa, and thus sufficient strength was not obtained. In addition, Fn3 was low, and thus the residue total content was low. Therefore, the relative breaking elongation was less than 80%, and thus sufficient hydrogen embrittlement resistance was not obtained.

In Test No. 20, Fn1 was too low. Therefore, the tensile strength was less than 750 MPa, and thus sufficient strength was not obtained.

In Test No. 21, Fn2 was too high. Therefore, the tensile strength was less than 750 MPa, and thus sufficient strength was not obtained.

In Test No. 22, the heat treatment temperature T1 was too high. Consequently, the grain size number was less than 8.5. As a result, the tensile strength was less than 750 MPa, and thus sufficient strength was not obtained. Note that, although the residue total content was low in Test No. 22, the tensile strength was low, and therefore the hydrogen embrittlement resistance did not become excessively low.

In Test No. 23, the average cooling rate CR in the hot working process was too slow. Therefore, the residue total content was high. As a result, the relative breaking elongation was less than 80%, and thus sufficient hydrogen embrittlement resistance was not obtained.

In Test No. 24, the rapid cooling start temperature was too low. Therefore, the residue total content was high. As a result, the relative breaking elongation was less than 80%, and thus sufficient hydrogen embrittlement resistance was not obtained.

In Test No. 25, the average cooling rate CR in the hot working process was too fast. Therefore, the residue total content was too low. As a result, the relative breaking elongation was less than 80%, and thus sufficient hydrogen embrittlement resistance was not obtained.

In Test No. 26, the rapid cooling start temperature was too high. Therefore, the residue total content was too low. As a result, the relative breaking elongation was less than 80%, and thus sufficient hydrogen embrittlement resistance was not obtained.

EXAMPLE 2

Austenitic stainless steel materials (steel plates) having the chemical compositions shown in Table 4 (Table 4-1 and Table 4-2) were produced by the following method.

[Table 4-1]

| Test No. | Chemical composition (unit is mass%, the balance is Fe and impurities) | | | | | | | | | | | |
|---|---|---|---|---|---|---|---|---|---|---|---|---|
| | C | Si | Mn | P | S | Cr | Ni | Al | N | O | Nb | V |
| 1 | 0.077 | 0.81 | 2.52 | 0.021 | 0.001 | 20.1 | 9.5 | 0.010 | 0.25 | 0.006 | 0.15 | - |
| 2 | 0.077 | 0.81 | 2.52 | 0.021 | 0.001 | 20.1 | 9.5 | 0.010 | 0.25 | 0.006 | 0.15 | - |
| 3 | 0.059 | 0.26 | 2.34 | 0.020 | 0.002 | 18.4 | 7.8 | 0.003 | 0.31 | 0.007 | 0.13 | 0.28 |
| 4 | 0.060 | 0.60 | 0.50 | 0.020 | 0.002 | 21.5 | 11.5 | 0.002 | 0.39 | 0.007 | 0.13 | 0.29 |
| 5 | 0.120 | 0.24 | 2.32 | 0.020 | 0.002 | 20.2 | 8.8 | 0.001 | 0.30 | 0.006 | 0.15 | 0.28 |
| 6 | 0.010 | 0.10 | 2.30 | 0.020 | 0.003 | 19.8 | 9.5 | 0.008 | 0.31 | 0.004 | 0.10 | 0.15 |
| 7 | 0.030 | 0.40 | 0.80 | 0.020 | 0.001 | 18.1 | 10.1 | 0.008 | 0.35 | 0.001 | - | 0.16 |
| 8 | 0.077 | 0.81 | 2.52 | 0.021 | 0.001 | 22.1 | 9.5 | 0.010 | 0.25 | 0.006 | 0.16 | - |
| 9 | 0.080 | 0.80 | 1.00 | 0.018 | 0.001 | 19.8 | 10.0 | 0.050 | 0.18 | 0.007 | 0.35 | 0.01 |
| 10 | 0.071 | 0.42 | 2.50 | 0.025 | 0.001 | 24.0 | 7.5 | 0.004 | 0.20 | 0.005 | 0.15 | 0.01 |
| 11 | 0.077 | 0.82 | 2.30 | 0.021 | 0.001 | 20.1 | 7.5 | 0.010 | 0.18 | 0.009 | 0.10 | - |
| 12 | 0.019 | 0.78 | 2.05 | 0.023 | 0.001 | 17.4 | 8.8 | 0.005 | 0.24 | 0.002 | - | - |
| 13 | 0.030 | 0.41 | 2.30 | 0.020 | 0.001 | 20.1 | 7.5 | 0.040 | 0.13 | 0.001 | 0.11 | 0.28 |

[Table 4-2]

| Test No. | Chemical composition (unit is mass%, the balance is Fe and impurities) | | | | | | Fn1 | Fn2 | Fn3 |
|---|---|---|---|---|---|---|---|---|---|
| | Mo | B | Cu | Co | Ca | REM | | | |
| 1 | - | - | - | - | - | - | 0.58 | 22.2 | 0.15 |
| 2 | - | - | - | - | - | - | 0.58 | 22.2 | 0.15 |
| 3 | 0.40 | - | - | - | 0.035 | - | 0.68 | 17.2 | 0.41 |
| 4 | - | - | - | - | - | - | 0.84 | 24.0 | 0.42 |
| 5 | - | - | - | - | - | - | 0.72 | 19.9 | 0.43 |
| 6 | - | - | - | - | - | - | 0.63 | 22.3 | 0.25 |
| 7 | - | - | - | - | - | - | 0.73 | 20.3 | 0.16 |
| 8 | - | - | - | - | - | - | 0.58 | 23.2 | 0.16 |
| 9 | - | - | - | - | - | - | 0.44 | 24.0 | 0.36 |
| 10 | - | - | 0.50 | - | - | - | 0.47 | 20.7 | 0.16 |
| 11 | - | - | - | - | - | - | 0.44 | 18.3 | 0.10 |
| 12 | - | - | - | - | - | - | 0.50 | 19.3 | 0.00 |
| 13 | - | - | - | - | - | - | 0.29 | 20.6 | 0.39 |

Specifically, 180-kg ingots were produced by vacuum melting. The produced ingots were subjected to hot forging, and thereafter subjected to hot rolling to produce steel plates (intermediate steel materials) of 200 mm in width × 20 mm in thickness. Note that, for each test number, the heating temperature before hot forging, and the heating temperature before hot rolling were each in the range of 950 to 1100°C, and the cumulative reduction of area in the hot working (hot forging and hot rolling) was 50%. The finishing temperature of the hot working was 900°C or more. The average cooling rate CR (°C/sec) from the finishing temperature to the rapid cooling start temperature, and the rapid cooling start temperature (°C) were as shown in Table 5. Water cooling was performed as the rapid cooling.

[Table 5]

| Test No. | Average cooling rate CR (°C/s) | Rapid cooling start temperature (°C) | Heat treatment temperature T1 (°C) | Reduction of area RD (%) | Heat treatment temperature T2 (°C) |
|---|---|---|---|---|---|
| 1 | 1.0 | 750 | 1100 | 20 | 1060 |
| 2 | 1.0 | 750 | 1100 | 10 | 1060 |
| 3 | 1.1 | 750 | 1200 | 20 | 1060 |
| 4 | 1.0 | 750 | 1050 | 20 | 950 |
| 5 | 0.8 | 750 | 1100 | 60 | 1150 |
| 6 | 1.0 | 750 | 1100 | 20 | 1060 |
| 7 | 1.0 | 750 | 1100 | 20 | 1060 |
| 8 | 1.0 | 750 | 1100 | 20 | 1060 |
| 9 | 0.9 | 750 | 1100 | 20 | 1060 |
| 10 | 1.0 | 750 | 1100 | 20 | 1060 |
| 11 | 1.1 | 750 | 1100 | 20 | 1060 |
| 12 | 0.9 | 750 | 1100 | 20 | 1060 |
| 13 | 1.0 | 750 | 1100 | 20 | 1060 |

The intermediate steel material after cooling was subjected to the first heat treatment process. The heat treatment temperature T1 (°C) in the first heat treatment process was as shown in Table 5. Note that, the holding time t1 (min) was 15 minutes in each test number. The intermediate steel material was water-cooled immediately after extraction from the heat treatment furnace.

The intermediate steel material after the first heat treatment process was subjected to the cold working process. Specifically, the intermediate steel material was subjected to cold rolling. The reduction of area RD (%) was as shown in Table 5. The intermediate steel material after a cold rolling process was subjected to the second heat treatment process. The heat treatment temperature T2 (°C) in the second heat treatment process was as shown in Table 5. Note that, the holding time t2 (min) was 15 minutes in each test number. The intermediate steel material was water-cooled immediately after extraction from the heat treatment furnace. Austenitic stainless steel materials (steel plates) were produced by the above production process.

[Evaluation tests]

The austenitic stainless steel material of each test number was subjected to test 1 to test 4, similarly to Example 1. The determined grain size number, content of Cr in the residue (residue Cr content), residue total content (mass%), 0.2% proof stress (MPa), tensile strength (MPa), and relative breaking elongation (%) are shown in Table 6. In Table 6 "<0.001" in the column "Residue Cr Content (mass%)" indicates that the residue Cr content was less than or equal to the detection limit (that is, less than 0.001%).

[Table 6]

| Test No. | Grain size number | Residue Cr content (mass%) | Residue total content (mass%) | 0.2% proof stress (MPa) | Tensile strength (MPa) | Relative breaking elongation (%) | Remarks |
|---|---|---|---|---|---|---|---|
| 1 | 10.1 | 0.061 | 0.218 | 453 | 828 | 82 | Inventive Example |
| 2 | 9.6 | 0.054 | 0.203 | 451 | 811 | 80 | Inventive Example |
| 3 | 10.1 | 0.172 | 0.382 | 465 | 832 | 90 | Inventive Example |

(continued)

| Test No. | Grain size number | Residue Cr content (mass%) | Residue total content (mass%) | 0.2% proof stress (MPa) | Tensile strength (MPa) | Relative breaking elongation (%) | Remarks |
|---|---|---|---|---|---|---|---|
| 4 | 10.1 | 0.062 | 0.201 | 480 | 811 | 92 | Inventive Example |
| 5 | 10.6 | 0.081 | 0.296 | 526 | 902 | 101 | Inventive Example |
| 6 | 10.2 | <0.001 | 0.221 | 489 | 829 | 95 | Inventive Example |
| 7 | 9.8 | 0.051 | 0.253 | 490 | 814 | 90 | Inventive Example |
| 8 | 9.7 | 0.034 | 0.233 | 440 | 801 | 99 | Inventive Example |
| 9 | 9.3 | 0.144 | 0.317 | 440 | 810 | 80 | Inventive Example |
| 10 | 9.6 | 0.061 | 0.218 | 504 | 833 | 82 | Inventive Example |
| 11 | 9.7 | 0.015 | 0.083 | 453 | 803 | 65 | Comparative Example |
| 12 | 8.9 | 0.010 | 0.012 | 398 | 750 | 55 | Comparative Example |
| 13 | 9.1 | 0.275 | 0.396 | 383 | 692 | 89 | Comparative Example |

[Test results]

Referring to Table 4 (Table 4-1 and Table 4-2), Table 5, and Table 6, in Test Nos. 1 to 10, feature 1 to feature 4 were satisfied, and furthermore, the grain size number was 9.0 or more and the tensile strength was 800 MPa or more. In these test numbers, the relative breaking elongation was 80% or more and thus excellent hydrogen embrittlement resistance was obtained.

In Test No. 11, Fn3 was too low. Therefore, the relative breaking elongation was less than 80%, and thus sufficient hydrogen embrittlement resistance was not obtained.

In Test No. 12, Nb and V were not contained. Consequently, the grain size number was less than 9.0, and the tensile strength was less than 800 MPa. In addition, Fn3 was low, and thus the residue total content was low. Therefore, the relative breaking elongation was less than 80%, and thus sufficient hydrogen embrittlement resistance was not obtained.

In Test No. 13, the content of N was too low. Further, Fn1 was too low. In addition, the residue Cr content was too high. Therefore, the tensile strength was less than 750 MPa, and thus sufficient strength was not obtained.

An embodiment of the present disclosure has been described above. However, the embodiment described above is merely an example for carrying out the present disclosure. Therefore, the present disclosure is not limited to the above-described embodiment, and can be implemented by appropriately modifying the above-described embodiment within a range that does not depart from the gist thereof.

**Claims**

1. An austenitic stainless steel material that has a chemical composition consisting of, by mass%,

    C: 0.005 to 0.150%,
    Si: more than 0% and 1.00% or less,
    Mn: 0.50% or more and less than 7.00%,
    P: more than 0% and 0.050% or less,
    S: more than 0% and 0.010% or less,
    Cr: 17.0 to 25.0%,
    Ni: 6.5 to 12.0%,
    Al: more than 0% and 0.050% or less,
    N: 0.15 to 0.50%,
    O: more than 0% and 0.010% or less,
    one or two elements selected from a group consisting of Nb: more than 0% and 1.00% or less and V: more than 0% and 1.00% or less,
    Mo: 0 to 1.00%,
    B: 0 to 0.0100%,

Cu: 0 to 0.50%,
Co: 0 to 0.50%,
Ca: 0 to 0.035%, and
rare earth metal: 0 to 0.500%,
with the balance being Fe and impurities,
satisfies Formula (1), Formula (2), and Formula (3), and
has a grain size number of 8.5 or more;
wherein:

when the chemical composition is taken as 100% in percent by mass, a total content of Nb, V, Cr, N, and C in a residue obtained by an extraction residue method is 0.090 to 0.425% in percent by mass; and
when the chemical composition is taken as 100% in percent by mass, a content of Cr in the residue obtained by the extraction residue method is 0.180% or less in percent by mass;

$$2N + C > 0.40 \quad (1)$$

$$-7.1 + 2.7Ni + 0.49Cr + 2.0Mo - 2.0Si + 0.75Mn - 5.7C - 24N \le 24.0 \quad (2)$$

$$Nb + V \ge 0.15 \quad (3)$$

where, a content of a corresponding element in percent by mass in the chemical composition is substituted for each symbol of an element in Formula (1) to Formula (3), and if an element is not contained, "0" is substituted for the corresponding symbol of an element.

2. The austenitic stainless steel material according to claim 1, wherein the chemical composition contain one or more types of element selected from a group consisting of, by mass%,

Mo: 0.01 to 1.00%,
B: 0.0001 to 0.0100%,
Cu: 0.01 to 0.50%,
Co: 0.01 to 0.50%,
Ca: 0.001 to 0.035%, and
rare earth metal: 0.001 to 0.500%.

3. The austenitic stainless steel material according to claim 1 or claim 2, wherein:

the grain size number is 9.0 or more, and
a tensile strength is 800 MPa or more.

## INTERNATIONAL SEARCH REPORT

| International application No. |
|---|
| **PCT/JP2024/001538** |

| A. | CLASSIFICATION OF SUBJECT MATTER |
|---|---|

*C22C 38/00*(2006.01)i; *C21D 8/00*(2006.01)i; *C22C 38/58*(2006.01)i
FI:   C22C38/00 302Z; C22C38/58; C21D8/00 E

According to International Patent Classification (IPC) or to both national classification and IPC

| B. | FIELDS SEARCHED |
|---|---|

Minimum documentation searched (classification system followed by classification symbols)

C22C38/00; C21D8/00; C22C38/58

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2012/132992 A1 (NIPPON STEEL & SUMITOMO METAL CORP.) 04 October 2012 (2012-10-04) | 1-3 |
| A | JP 2021-21093 A (NIPPON STEEL CORPORATION) 18 February 2021 (2021-02-18) | 1-3 |
| A | WO 2016/068009 A1 (NIPPON STEEL & SUMITOMO METAL CORP.) 06 May 2016 (2016-05-06) | 1-3 |
| A | JP 2016-183412 A (NIPPON STEEL & SUMIKIN STAINLESS STEEL CORP.) 20 October 2016 (2016-10-20) | 1-3 |
| A | JP 2021-139008 A (NIPPON STEEL CORPORATION) 16 September 2021 (2021-09-16) | 1-3 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 April 2024** | **16 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/001538**

| Patent document cited in search report | | | Publication date (day/month/year) | Patent family member(s) | | | Publication date (day/month/year) |
|---|---|---|---|---|---|---|---|
| WO | 2012/132992 | A1 | 04 October 2012 | US | 2014/0017111 | A1 | |
| | | | | US | 2016/0304983 | A1 | |
| | | | | EP | 2692886 | A1 | |
| | | | | AU | 2012234641 | A1 | |
| | | | | CA | 2824463 | A1 | |
| | | | | CN | 103476959 | A | |
| | | | | KR | 10-2013-0121981 | A | |
| | | | | BR | 112013018100 | A2 | |
| | | | | DK | 2692886 | T3 | |
| | | | | ES | 2735299 | T3 | |
| JP | 2021-21093 | A | 18 February 2021 | (Family: none) | | | |
| WO | 2016/068009 | A1 | 06 May 2016 | US | 2017/0314092 | A1 | |
| | | | | EP | 3214194 | A1 | |
| | | | | AU | 2015338140 | A1 | |
| | | | | KR | 10-2017-0029617 | A | |
| | | | | CA | 2963770 | A1 | |
| | | | | CN | 106795606 | A | |
| | | | | BR | 112017000121 | A2 | |
| | | | | ES | 2769201 | T3 | |
| JP | 2016-183412 | A | 20 October 2016 | US | 2016/0281187 | A1 | |
| | | | | US | 2021/0395850 | A1 | |
| JP | 2021-139008 | A | 16 September 2021 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018135592 A

- JP 2021139007 A